# EUROPEAN PATENT SPECIFICATION

(11) **EP 0 857 833 B1**
(45) Date of publication and mention of the grant of the patent: **25.09.2002**
(21) Application number: 98200194.3
(22) Date of filing: 23.01.1998
(51) Int. Cl.: E04B 1/80

(54) **Vacuum insulation panel**
Vakuumisolierpaneel
Panneau isolant sous vide

(30) Priority: 10.02.1997 NL 1005245
(43) Date of publication of application: 12.08.1998
(73) Proprietor: LEVEL ENERGIETECHNIEK B.V., 5691 GD Son (NL); Isoltra International S.A., 1840 Luxembourg (LU); De Graaf, Rudolf Alexander Johannes, 6543 XW Nijmegen (NL); OPSTALAN B.V., 5061 KD Oisterwijk (NL)
(72) Inventor: Weekamp, Johannes Wilhelmus, 5741 DH Beek en Donk (NL)
(74) Representative: Eveleens Maarse, Pieter

(56) References cited:
- WO-A-96/01346
- DE-A- 2 520 062
- DE-A- 3 940 649
- GB-A- 2 261 247
- US-A- 5 399 397

## Description

The present invention relates to a thermal insulation panel, comprising a gastight housing manufactured substantially from rectangular walls and a filling arranged inside the housing and resistant to pressure forces, wherein the pressure is reduced in the interior of the housing to a level at which no heat transport of any significance takes place.

Such thermal insulation panels are known from WO-A-96/01346.

A vacuum is here not understood to mean an absolute vacuum, but a low pressure such that in the interior of the housing the thermal conduction through the remaining gas molecules is so small that it is negligible. This amounts in practice to a pressure smaller than 1000 Pa. This value depends on the filler material.

In order to be able to sustain the correct insulating value for the whole lifespan of such a thermal insulation panel, it is of the greatest importance that the panel remains gastight. This gastightness results in the use of materials for the housing which usually have a rather high thermal conduction. This is caused on the one hand by the choice of material and on the other by the choice of the thickness of the panels which is required to enable the gastightness to be sustained.

This results in the prior art to a rather large thermal leakage along the walls parallel to the temperature gradient. This has a considerable influence on the effectiveness of such a prior art thermal insulation panel.

The object of the present invention is to provide such an insulation panel, wherein thermal leakage along the walls parallel to the temperature gradient is as small as possible.

This object is achieved in that at least the walls of the housing which have a direction coinciding with the temperature gradient comprise a wall part located at some distance from the edges which is made thinner relative to the thickness of the wall adjacently of the edges.

It will be apparent that reducing the wall thickness will reduce the temperature conduction to a great extent. The reduction in the wall thickness herein does not generally result in a reduction in the strength of the panel, or hardly so; this is in any case largely determined by the degree of compressibility of the filling. What is important, however, is the fact that the walls must somehow or other be fixed to each other in gastight manner. All currently known fixing techniques require a determined minimum wall thickness to enable a reliable gastight seam. The measure according to the present invention meets this requirement by maintaining the wall thickness in the vicinity of the seams and only making them thinner elsewhere.

According to a first embodiment, the walls of the insulation panel are manufactured from metal, for instance steel, stainless steel or aluminium, and the thinned wall parts of the walls are obtained by etching or grinding the walls.

It is however equally possible for the walls to be manufactured from other materials, for instance plastics, in particular laminated plastics. In the manufacture of such walls the relevant thinning can already be arranged, for instance during extrusion. According to yet another embodiment, the seams for mutual connection during assembly of the housing are formed by laser welding or by soldering.

The present invention also relates to a method for manufacturing an insulation panel as according to any of the preceding claims, comprising of gastight closing of the housing while inserting the filling and leaving open a flush aperture arranged in one of the walls and subsequently vacuumizing the interior of the housing through the flush aperture.

Other attractive embodiments are stated in the remaining claims.

The present invention will be elucidated hereinbelow with reference to annexed drawings, in which:
figure 1 shows a perspective view of a first embodiment of an insulation panel according to the invention;
figure 2 shows a perspective view of a second embodiment of an insulation panel according to the invention;
figure 3 shows a top view of a number of adjacently arranged insulation panels according to figure 2;
figure 4 shows a cross-sectional view of a detail of a seam of an insulation panel according to the invention;
figures 5a, b and c show schematic views of diverse configurations for assembly of a panel according to the invention;
figure 6 show a cross-sectional view of a panel during welding; and
figure 7 shows a schematic perspective view of a part of a panel according to the invention during evacuation thereof.

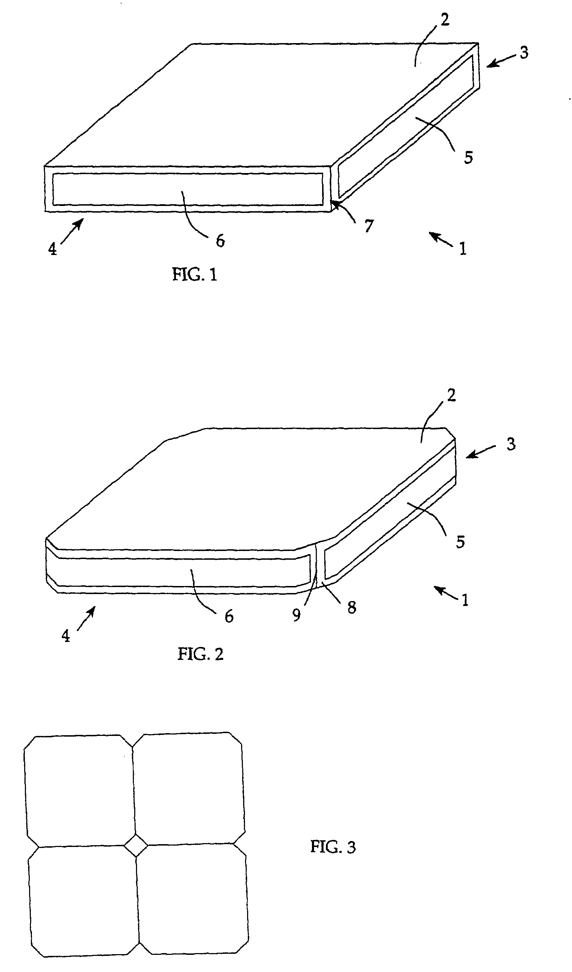

Shown in figure 1 is an insulation panel 1 which is formed by a wall 2 extending perpendicularly of the temperature gradient and four walls adjoining thereto which extend parallel to the temperature gradient, two of which, that is 3,4, are visible. Finally, the panel comprises a wall (not shown in the drawing) which extends parallel to wall 2 and which adjoins the other four walls.

The insulation panel 1 is manufactured for instance from metal, for instance from aluminium or stainless steel, wherein at the location of the edges the walls are mutually connected by welds or, depending on the configuration, by folded seams. The panel is evacuated internally, wherein the panel is filled with a filling imparting firmness to the panel. It is self-evident that this filling is manufactured from a material with the lowest possible thermal conduction.

In order, as already stated, to contain the thermal leakage along the walls 3,4 as much as possible, the walls 3,4 and the other walls not shown in the drawing and extending parallel to the temperature gradient are provided with a thinned wall part 5 respectively 6.

By thinning the wall over a substantial part of the surface of the relevant walls a considerable reduction in the thermal conductivity is obtained. It is pointed out here that this thinning amounts to about a factor of 10. It is however possible to apply other thinning factors, for instance between 2 and 20. The minimum wall thickness is herein determined by the thickness at which small holes, the so-called pin holes, occur. These may not occur if the vacuum is to be maintained.

By maintaining the original thickness of the wall in the vicinity of the ribs a sufficient strength of the panel is obtained, while it is still possible to manufacture a good seam as a result of this thickness, for instance by welding or soldering. This of course assumes a panel made of metal.

It is likewise possible to start from a panel manufactured for instance from plastic, wherein fixing takes place by means of welding or glueing. It is however essential for the gastightness to obtain a determined thickness at the location of the seam.

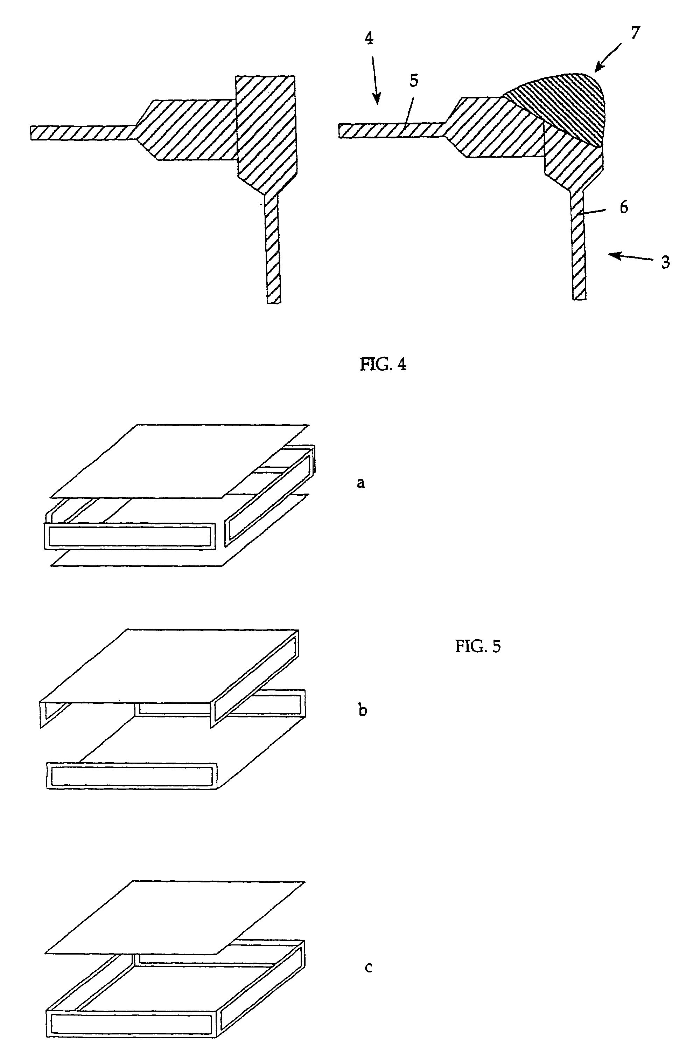

Figure 4 shows such a welded seam in cross-section. Panels 3 and 4 are mutually connected herein by means of a butt joint 7.

It is however also possible for the seam to be formed by folding a plate.

It is possible to arrange the thinning in the walls in different ways, for instance by deforming, etching, grinding or other forms of machining. When plastics are used, use can be made of techniques for forming plastic; such as injection moulding, extruding or blow-moulding.

In figure 2 is shown an embodiment of the insulation panel wherein the edges of the walls extending parallel to the temperature gradient are provided with a chamfering 8. Adjacent panels are herein connected by a seam 9 which forms a connection between two wall parts lying in one plane. This demonstrates that it is not therefore necessary per se for a seam to coincide with an edge. An advantage of this embodiment is that it is possible to fix such panels with simple fixing means against a support extending transversely of the temperature gradient, for instance by means of bolts or other fastening means which are of course manufactured from a poorly conducting material. When panels are assembled in one plane the chamfering of a corner results in the creation of a passage at the position of the junction of four panel corners. This passage can be utilized for through-feed of conduits or for fixing the panels, while the heat loss is kept relatively low when conventional insulation materials are used. Figure 3 shows a view of such a configuration. This embodiment further shows that it is possible for the thinned wall parts 5,6 to extend through an angle, albeit an obtuse one, at the position of the chamfering 8.

Figures 5a, 5b, 5c show different configurations of blanks from which such a panel can be manufactured. When chamfering of the edges is omitted, the configuration of figure 5b or 5c is recommended; only the smallest seam length need herein be connected.

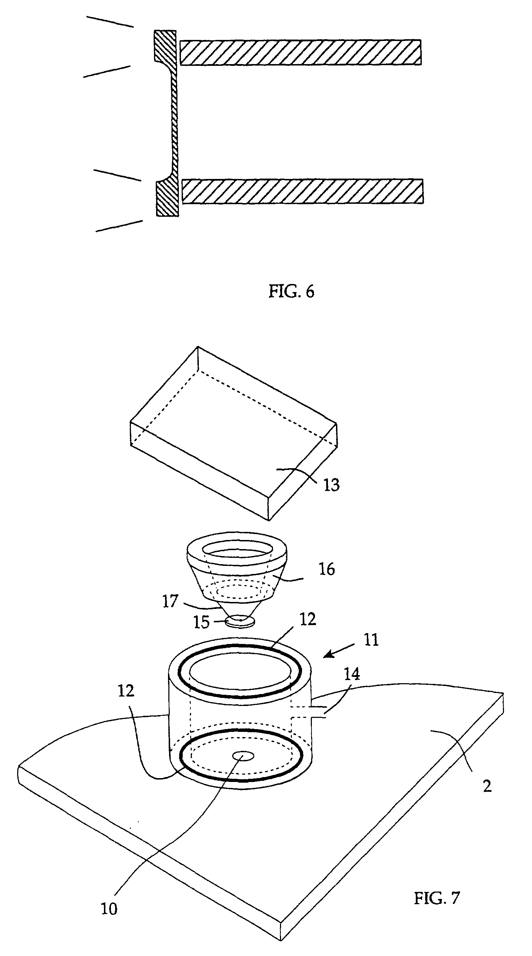

When one seam is welded the thin side walls are warped by the thermal stress which occurs. The side walls are therefore welded simultaneously at the top and bottom, whereby the deforming forces are mirror-symmetrical and neutralize each other. It is hereby possible to dispense with the pre-fixing of the side walls at points distributed over the length which is customary in welding before the weld seam is made. This is shown in figure 6.

Finally, figure 7 shows a device for vacuumizing the insulation panel according to the invention.

Shown in figure 7 is a part of the large wall 2 in which a flush aperture 10 is arranged. This flush aperture is used to vacuumize the interior of the panel after assembling of the panel. Placed for this purpose on panel 2 is a bell-jar 11 which is provided on its underside with a groove in which is placed an O-ring 12. The bell-jar 11 is also provided on its upper side with such a groove and an O-ring 12. The bell-jar can be further provided with a glass plate 13 which can be placed on 0-ring 12, whereby the bell-jar completely closes off flush aperture 10. Bell-jar 11 is further provided with a connection 14 for a vacuum pump. It is thus possible to form a vacuum in the interior of the panel.

For drying of the filling it is important that flushing with a dry gas takes place a number of times. For this purpose a vacuum is initially pumped, whereafter via the same connection of the bell-jar a dried gas, for instance hot dried nitrogen, is supplied, wherein the panel is heated, whereafter a vacuum can again be pumped. This process of pulsed evacuation can be repeated a number of times.

A cover 15 is subsequently placed and welded fixedly onto flush aperture 10. Owing to the fact that bell-jar 11 and plate 13 are made of glass, preferably quartz glass, it is possible to close off aperture 10 by means of for instance laser welding.

For manoeuvring of cover 15 into its position use can be made of a metal insert 16 which fits into bell-jar 11, from which insert the cover 15 is suspended by means of a thread 17. During vacuumizing of the interior the cover 15 will be lifted by the gas flow. After evacuation the weight of the insert 16 ensures pressing on of the cover 15, so that it acts as non-return valve. The thread 17 can easily be broken after welding. In order to create a larger opening during evacuation the panel and bell-jar with glass plate can be held upside down in its entirety. Bell-jar 11 and glass plate 13 are pressed against the plate by the atmospheric pressure force as a result of the vacuum in bell-jar 11. The insert 16 shifts such that apertures 14 and 10 are left clear. For the purpose of welding the panel is placed "upright" and cover 15 drops onto aperture 10. During welding in vacuum, metal vapours may be deposited on the glass, thus making welding more difficult. Provisions herefor can be: a deflection unit; and increasing the distance between glass plate 13 and aperture 10.

As fields of application for such insulation panels are envisaged cooled areas, for instance industrial cold stores or even domestic refrigerating devices, but also panels for insulating for instance buildings.

## Claims

1. Thermal insulation panel (1), comprising a gastight housing manufactured substantially from rectangular walls (2,3,4) and a filling arranged inside the housing, the filling being resistant to pressure forces, wherein the pressure is reduced in the interior of the housing to a level at which no heat transport of any significance takes place, **characterized in that** at least the walls (3,4) of the housing which extend in a direction coinciding with the temperature gradient comprise a wall part (5,6) located at some distance from the edge of the respective wall and which is made thinner relative to the thickness of the wall (3,4) adjacently of the edge.

2. Insulation panel (1) as claimed in claim 1, **characterized in that** the walls (2,3,4) of the insulation panel (1) are manufactured from metal, for instance steel or aluminium, and the thinned wall parts (5,6) of the walls (2,3,4) are obtained by deforming, etching, grinding or other forms of machining the walls (3,4).

3. Insulation panel as claimed in claim 2, **characterized in that** seams for mutual connection of the walls (2,3,4) during assembly of the housing are formed by welding or by soldering (7).

4. Insulation panel (1) as claimed in claim 2 or 3, **characterized in that** the housing is assembled from two blanks, wherein each blank comprises a surface (2) with the temperature gradient transversely of the surface and two adjacent surfaces (3,4), wherein after the process for forming the thinned surfaces (5,6) the blanks are folded and subsequently mutually connected on the seams during addition of the filling.

5. Insulation panel (1) as claimed in any of the foregoing claims, **characterized in that** the walls (2,3,4) have a thickness in the vicinity of the edges in the order of magnitude of 0.2 mm and that the thinned wall parts (5,6) have a thickness in the order of magnitude of 0.04 mm.

6. Insulation panel (1) as claimed in any of the foregoing claims, **characterized in that** the panel (1) is provided on its edges extending parallel to the temperature gradient with at least one chamfering.

7. Method for manufacturing an insulation panel (1) as claimed in any of the foregoing claims, comprising of gastight closing of the housing while inserting the filling and leaving open at least one flush aperture (10) arranged in one of the walls (2) and subsequently vacuumizing the interior of the housing through the flush aperture.

8. Method as claimed in claim 7, **characterized in that** the housing is manufactured by mirror-symmetrical welding (7) of the edges located on either side of a wall (3,4) extending transversely of the direction of the temperature gradient.

9. Method as claimed in claim 7 or 8, **characterized in that** after vacuumizing of the housing the housing is filled with a dry gas and that the housing is subsequently vacuumized again.

10. Method as claimed in claim 7, 8 or 9, **characterized in that** after airtight closure of the housing a glass bell-jar (11) connected to a vacuum pump is placed on this aperture (10), the vacuum pump is switched on and a closing element (15) is subsequently positioned onto the aperture and finally the closing element (15) is welded onto the relevant surface (2) by laser welding.

## Patentansprüche

1. Wärmeisolierungsplatte (1) umfassend ein gasdichtes Gehäuse, das im wesentlichen aus rechteckförmigen Wänden (2, 3, 4) und einer Füllung hergestellt ist, die in der Innenseite des Gehäuses angeordnet ist, wobei die Füllung gegenüber Druckkräften widerstandsfähig ist, wobei der Druck im Innern des Gehäuses auf ein Niveau verringert ist, bei dem kein Wärmetransport von irgendeiner Bedeutung stattfindet, **dadurch gekennzeichnet, dass** zumindest die Wände (3, 4) des Gehäuses, die sich in einer mit dem Temperaturgradienten koinzidierenden Richtung erstrecken, einen Wandteil (5, 6) aufweisen, der in gewissem Abstand von der Kante der betreffenden Wand angeordnet ist und der dünner relativ zur Dicke der Wand (3, 4) neben der Kante ausgebildet ist.

2. Isolierungsplatte (1) nach Anspruch 1, **dadurch gekennzeichnet, dass** die Wände (2, 3, 4) der Isolierungsplatte (1) aus Metall, beispielsweise aus Stahl oder Aluminium, hergestellt sind und dass die verjüngten Wandteile (5, 6) der Wände (2, 3, 4) durch Verformung, Ätzung, Schleifen oder durch andere Formen der Bearbeitung der Wände (3, 4) erhalten sind.

3. Isolierungsplatte nach Anspruch 2, **dadurch gekennzeichnet, dass** Nähte zur gegenseitigen Verbindung der Wände (2, 3, 4) während des Zusammenbaus des Gehäuses durch Schweißen oder Löten (7) gebildet sind.

4. Isolierungsplatte (1) nach Anspruch 2 oder 3, **dadurch gekennzeichnet, dass** das Gehäuse aus zwei Rohlingen zusammengebaut ist, wobei jeder Rohling eine Fläche (2) quer zu der der Temperaturgradient verläuft, und zwei benachbarten Flächen (3, 4) aufweist, wobei nach dem Prozess der Bildung der verjüngten Flächen (5, 6) die Rohlinge gefaltet und anschließend an den Nähten während der Zugabe der Füllung gegenseitig verbunden werden.

5. Isolierungsplatte (1) nach einem der vorhergehenden Ansprüche, **dadurch gekennzeichnet, dass** die Wände (2, 3, 4) in der Nähe der Kanten eine Dicke in der Größenordnung von 0,2 mm aufweisen und dass die verjüngten Wandteile (5, 6) eine Dicke in der Größenordnung von 0,04 mm aufweisen.

6. Isolierungsplatte (1) nach einem der vorhergehenden Ansprüche, **dadurch gekennzeichnet, dass** die Platte (1) an ihren Kanten, die parallel zu dem Temperaturgradienten verlaufen, mit zumindest einer Abschrägung versehen ist.

7. Verfahren zur Herstellung einer Isolierungsplatte (1) nach einem der vorhergehenden Ansprüche, umfassend ein gasdichtes Verschließen des Gehäuses während des Einführens der Füllung und des Offenlassens zumindest einer Spülöffnung (10), die in einer der Wände (2) angeordnet ist, und das anschließende Luftleerpumpen bzw. Evakuieren des Innenraums des Gehäuses durch die Spülöffnung.

8. Verfahren nach Anspruch 7, **dadurch gekennzeichnet, dass** das Gehäuse durch spiegelsymmetrisches Schweißen (7) der auf jeder Seite einer Wand (3, 4) liegenden Kanten hergestellt werden, die quer zur Richtung des Temperaturgradienten verläuft.

9. Verfahren nach Anspruch 7 oder 8, **dadurch gekennzeichnet, dass** nach dem Luftleerpumpen bzw. Evakuieren des Gehäuses das Gehäuse mit einem trocknen Gas gefüllt wird und dass das Gehäuse anschließend wieder luftleer gepumpt bzw. evakuiert wird.

10. Verfahren nach Anspruch 7, 8 oder 9, **dadurch gekennzeichnet, dass** nach luftdichtem Verschließen des Gehäuses eine Glasglocke (11), die mit einer Vakuumpumpe verbunden ist, auf dieser Öffnung (10) platziert wird, dass die Vakuumpumpe eingeschaltet wird und dass ein Verschlußelement (15) anschließend auf die Öffnung positioniert wird und das Verschlußelement (15) schließlich an die relevante Fläche (2) durch Laserschweißung angeschweißt wird.

## Revendications

1. Panneau isolant thermique (1) comprenant un boîtier étanche aux gaz fabriqué essentiellement à partir de parois rectangulaires (2, 3, 4) et un remplissage disposé à l'intérieur du boîtier, le remplissage étant résistant aux forces de pression, dans lequel la pression est réduite à l'intérieur du boîtier à un niveau auquel aucun transport de chaleur d'une quelconque importance n'a lieu, **caractérisé en ce qu'**au moins les parois (3, 4) du boîtier qui s'étendent dans une direction coïncidant avec le gradient de température comportent une partie de paroi (5, 6) située à une certaine distance du bord de la paroi respective et qui est réalisée plus mince par rapport à l'épaisseur de la paroi (3, 4) dans la zone adjacente au bord.

2. Panneau isolant (1) selon la revendication 1 **caractérisé en ce que** les parois (2, 3, 4) du panneau isolant (1) sont fabriquées en métal, par exemple de l'acier ou de l'aluminium, et les parties de parois amincies (5, 6) des parois (2, 3, 4) sont obtenues par déformation, corrosion, meulage ou autres modes d'usinage des parois (3, 4).

3. Panneau isolant selon la revendication 2 **caractérisé en ce que** des lignes de soudage de liaison mutuelle des parois (2, 3, 4 ) durant l'assemblage du boîtier sont formées par soudage ou par brasage (7).

4. Panneau isolant (1) selon la revendication 2 ou 3 **caractérisé en ce que** le boîtier est assemblé à partir de deux flans, chaque flan comprenant une surface (2) avec le gradient de température transversalement à la surface et deux surfaces adjacentes (3, 4), dans lequel après le processus de formage des surfaces amincies (5, 6) les flans sont pliés et subséquemment reliés mutuellement sur les lignes de soudage pendant l'addition du remplissage.

5. Panneau isolant (1) selon l'une quelconque des revendications précédentes, **caractérisé en ce que** les parois (2, 3, 4) ont au voisinage des bords une épaisseur de l'ordre de grandeur de 0,2 mm, et **en ce que** les parties de parois amincies (5, 6) ont une épaisseur de l'ordre de grandeur de 0,04 mm.

6. Panneau isolant (1) selon l'une quelconque des revendications précédentes **caractérisé en ce que** ledit panneau (1) est pourvu d'au moins un chanfrein sur ses bords qui s'étendent parallèlement au gradient de température.

7. Procédé de fabrication d'un panneau isolant (1) selon l'une quelconque des revendications précédentes, comprenant une fermeture du boîtier étanche aux gaz pendant l'insertion du remplissage et qu'on laisse ouverte au moins une ouverture affleurante (10) agencée dans l'une des parois (2), et que subséquemment on mette sous vide l'intérieur du boîtier à travers l'ouverture affleurante.

8. Procédé selon la revendication 7 **caractérisé en ce que** le boîtier est fabriqué par soudage (7) avec symétrie de miroir des bords situés de chaque côté d'une paroi (3, 4) s'étendant transversalement à la direction du gradient de température.

9. Procédé selon la revendication 7 ou 8 **caractérisé en ce que**, après mise sous vide du boîtier, le boîtier est rempli par un gaz sec et **en ce qu'**ensuite le boîtier est à nouveau mis sous vide.

10. Procédé selon l'une des revendications 7, 8 ou 9 **caractérisé en ce qu'**après fermeture étanche du boîtier, une cloche en verre (11) reliée à une pompe à vide est placée sur cette ouverture (10), **en ce que** la pompe à vide est branchée et un élément de fermeture (15) est ultérieurement positionné sur l'ouverture et finalement l'élément de fermeture (15) est soudé sur la surface correspondante (2) par soudage au laser.
